# EUROPÄISCHE PATENTSCHRIFT

(11) **EP 3 278 693 B1**
(45) Veröffentlichungstag und Bekanntmachung des Hinweises auf die Patenterteilung: **15.01.2020**
(21) Anmeldenummer: 17177387.2
(22) Anmeldetag: 22.06.2017
(51) Int. Cl.: A47K 3/34, E05D 15/06, F16B 35/00, F16B 39/02

(54) **BESCHLAG FÜR EINE SCHIEBETÜRE**
FITTING FOR A SLIDING DOOR
FERRURE DE PORTE COULISSANTE

(30) Priorität: 01.08.2016 AT 506972016
(43) Veröffentlichungstag der Anmeldung: 07.02.2018
(73) Patentinhaber: TIF GmbH, 39042 Brixen (IT)
(72) Erfinder: RABENSTEINER, Alois, 39040 Villanders (IT)
(74) Vertreter: Torggler & Hofinger Patentanwälte

(56) Entgegenhaltungen:
- DE-C- 710 243
- DE-U1- 7 832 884
- FR-A1- 2 736 959
- GB-A- 788 871
- JP-A- 2003 120 633
- US-A- 2 203 219

## Beschreibung

Die vorliegende Erfindung betrifft einen Beschlag mit den Merkmalen des Oberbegriffes des Anspruchs 1.

Weiters soll eine Schiebetüre mit zumindest einem Beschlag und auch eine Duschtrennwand mit einer Schiebetüre angegeben werden. Zudem soll ein Verfahren zur Einstellung eines Beschlages angegeben werden.

Beschläge der eingangs genannten Art sind beispielsweise aus der EP 1020154 A2, der EP 0818598 A1, der DE 3338146 A1 und der CH 512658 A bekannt und werden zur Höhenverstellung von Schiebetüren verwendet.

Das Dokument DE7832884U offenbart ein Beschlag gemäß dem Oberbegriff des Anspruchs 1. Durch die Höhenverstellung der Schiebetüre kann die Schiebetüre an eine Duschtrennwand angepasst werden. Weiters wird durch die Höhenverstellung ermöglicht, Fertigungstoleranzen an der Schiebetüre oder der Duschtrennwand auszugleichen. Zudem wird durch die Höhenverstellung ermöglicht, Abweichungen an der Wand oder Decke eines Raumes, in dem die Duschtrennwand aufgebaut wird, auszugleichen. Problematisch dabei ist, dass die Verstellung oftmals unter erschwerten Bedingungen erfolgt, da die Verstellvorrichtung schwer zugänglich ist. Weiters ist oftmals nicht gewährleistet, dass die eingestellte Position auch über einen langen Zeitraum erhalten bleibt. Beschläge der eingangs genannten Art weisen oftmals eine Verstellschraube auf, welche bei mehrmaligem Gebrauch einer Schiebetüre über einen längeren Zeitraum dazu neigt, sich zu verstellen. Durch oftmaliges Öffnen und Schließen von Schiebetüren entstehen Belastungen am Beschlag, welche die Verstellvorrichtung lösen oder lockern können, wobei die eingestellte Position verloren geht. Die Schiebetüre ist in diesem Fall nicht mehr korrekt positioniert, was zu einem erschwerten Öffnen der Schiebetüre oder einer Beschädigung der Schiebetüre, der Führungsprofile oder einen anderen Element der Duschtrennwand führen kann.

Aufgabe der Erfindung ist es, die vorbeschriebenen Nachteile zu vermeiden und einen gegenüber dem Stand der Technik verbesserten Beschlag, eine gegenüber dem Stand der Technik verbesserte Schiebetüre und eine gegenüber dem Stand der Technik verbesserte Duschtrennwand und ein Verfahren zur Einstellung eines derartigen Beschlages anzugeben.

Dies wird bei dem erfindungsgemäßen Beschlag durch die Merkmale des Anspruchs 1 definiert.

Wenn der Beschlag eine axial in Richtung der Stellachse in die Aufhängung einsetzbare Feststellvorrichtung zur Arretierung der Position der Verstellvorrichtung aufweist, so kann nach der Einstellung der Position durch die Verstellvorrichtung über die Feststellvorrichtung die vorgewählte Position arretiert werden. Auch nach mehrmaligem Gebrauch der Schiebetüre über einen langen Zeitraum ist eine Verstellung der Position der Verstellvorrichtung ausgeschlossen.

Wenn die Verstellvorrichtung sich entlang der Stellachse erstreckt, wobei die Stellachse in Einbaulage des Beschlages geneigt zur Längserstreckung des Führungsprofiles ausgerichtet ist, so werden die wirkenden Kräfte auf die Verstellvorrichtung aufgrund der geneigten Erstreckung besser aufgenommen und wirken nicht direkt auf z. B. eine vertikal ausgerichtete Verstellvorrichtung. Die Kräfte werden somit besser in den Beschlag eingeleitet, die Verstellvorrichtung muss nicht sämtliche Vertikalkräfte aufnehmen. Durch die geneigte Ausrichtung - vorzugsweise schräg nach unten geneigt zur Längserstreckung des Führungsprofiles - wird es dem Montagepersonal zudem erleichtert, auf die Verstellvorrichtung zuzugreifen. Das Werkzeug kann dabei schräg zur Schiebetüre in die Verstellvorrichtung eingeführt werden, eine Kollision mit der Schiebetüre selbst ist beim Hantieren mit dem Werkzeug nicht zu erwarten. An den beiden oberen Ecken der Schiebetüre ist je ein Beschlag angeordnet. Die Stellachse der Verstellvorrichtung ist dabei immer schräg in Richtung der Seitenkante der Schiebetüre ausgerichtet, was ein Einführen des Werkzeuges schräg von unten in die Verstellvorrichtung ermöglicht.

Wenn die Verstellvorrichtung eine Stellschraube aufweist, wobei an der Stellschraube ein Schlitten angeordnet ist, wobei bei der Verdrehung der Stellschraube die Position des Schlittens entlang der Stellschraube veränderbar ist, ist eine kompakte Verstellvorrichtung realisierbar. Wird an der Stellschraube gedreht, verstellt sich der Schlitten entlang der Stellschraube. Der Schlitten verfährt dabei entlang einer sich an der Aufhängung erstreckenden Führung, wobei die Führung sich entlang der Stellachse erstreckt, wobei die Stellschraube drehbar aber unbeweglich in Richtung der Stellachse in der Führung gelagert ist. Durch die Anordnung des Schlittens und der Stellschraube in der Führung kann die Baugröße des Beschlages reduziert werden, eine stabile und kompakte Bauweise wird somit erreicht.

Wenn der Schlitten zumindest einen Achszapfen zur Lagerung des zumindest einen Laufkörpers aufweist, so wird die Verstellung direkt auf den Laufkörper übertragen, welcher sich im Führungsprofil befindet. Die Verstellung des Laufkörpers relativ zum Beschlag erfolgt somit unmittelbar, sobald die Verstellvorrichtung in ihrer Position verändert wird.

Wenn die Aufhängung eine Öffnung aufweist, durch welche die Verstellvorrichtung mittels geeignetem Werkzeug - vorzugsweise durch einen Inbusschlüssel, Torxschlüssel oder einen Schraubenzieher - kontaktierbar und verstellbar ist, wobei sich die Öffnung entlang der Stellachse erstreckt, so kann über diese Öffnung mit dem Werkzeug auf die Verstellvorrichtung zugegriffen werden. Die Verstellvorrichtung bleibt dabei im Inneren des Beschlages verborgen. Diese ist nicht nach außen sichtbar und stört somit nicht das Erscheinungsbild des Beschlages. Weiters ist die Verstellvorrichtungvom Spritzwasser der Dusche, vor Staub oder sonstigen Verunreinigungen geschützt. Die Öffnung wird nach der Verstellung der Verstellvorrichtung durch die Feststellvorrichtung selbst verschlossen. Die Feststellvorrichtung dient somit nicht nur zur Arretierung der Position, sondern auch zum Verschließen des Beschlages nach erfolgter Verstellung der Verstellvorrichtung. Wenn die Feststellvorrichtung axial in Richtung der Stellachse in die Aufhängung einsetzbar ist, so erfolgt die Verstellung der Verstellvorrichtung und auch die Feststellung der Feststellvorrichtung in derselben Achse, was die Arbeit für das Montagepersonal stark erleichtert.

Wenn die Feststellvorrichtung durch eine Schraube, beispielsweise Madenschraube, ausgebildet ist und die Öffnung ein Gewinde zur Aufnahme der Feststellvorrichtung aufweist, so wird mit üblichen Mitteln eine einfache und trotzdem stabile Lösung zur Feststellung der Verstellvorrichtung realisiert. Durch die Verwendung einer Schraube wird die Öffnung nach der Feststellung der Feststellvorrichtung gleichzeitig verschlossen. Durch den bei der Feststellung der Feststellvorrichung erreichten Kraftschluss zwischen der durch als Schraube ausgebildeten Feststellvorrichtung und dem Kopf der Verstellschraube, ist ein ungewolltes Verstellen der Verstellvorrichtung nicht mehr zu erwarten. Dies erfolgt zudem, indem die Feststellvorrichtung im arretierten Zustand der Verstellvorrichtung axial in Richtung der Stellachse gegen die Verstellvorrichtung wirkt, vorzugsweise drückt und zwischen Verstellvorrichtung und Feststellvorrichtung eine kraftschlüssige Verbindung herstellbar ist, wobei der Kraftschluss zwischen Verstellvorrichtung und Feststellvorrichtung in Richtung der Stellachse wirkt.

Wenn die Feststellvorrichtung durch eine Schraube - vorzugsweise Madenschraube - ausgebildet ist, wobei diese in einen Kopf der Stellschraube eingreifbar in einem axial entlang der Stellachse ausgerichteten Gewinde einer Öffnung verdrehbar gelagert ist, so wird eine ausreichende Feststellkraft zur Arretierung der Stellschraube erreicht. Zudem wird ein äußerst geringer Platzbedarf für die Madenschraube realisiert, der Beschlag kann kompakt ausgeführt werden. Es sind keine Elemente der Feststellvorrichtung oder Verstellvorrichtung nach außen hin sichtbar - bis auf die Aufnahme des Werkzeuges zum Öffnen der Feststellvorrichtung.

Wenn die Verstellvorrichtung und die Feststellvorrichtung in Einbaulage im Inneren der Aufhängung angeordnet sind, so sind diese vor Einflüssen wie Spritzwasser, Staub oder anderen Verunreinigungen geschützt.

Wenn in der Einbaulage des Beschlages die Verstellung der Position des zumindest einen Laufkörpers relativ zur Aufhängung ein Anheben oder Absenken der Schiebetüre bewirkt, so ist die Position der Schiebetüre an ihren Einsatzort anpassbar.

Weitere Einzelheiten und Vorteile der vorliegenden Erfindung werden anhand der abhängigen Ansprüche gezeigt.

Weitere Einzelheiten und Vorteile der vorliegenden Erfindung werden anhand der Figurenbeschreibung unter Bezugnahme auf die in den Zeichnungen der Ausführungsbeispiele im Folgenden näher erläutert. Darin zeigen:
- Fig. 1: schematischer Aufbau des Beschlages,
- Fig. 2: Schrägansicht des Beschlages mit Verstellvorrichtung und Feststellvorrichtung,
- Fig. 3a bis 3f: Verfahren zur Einstellung eines Beschlages, und
- Fig. 4: Duschtrennwand mit Schiebetüre und zwei Beschlägen.

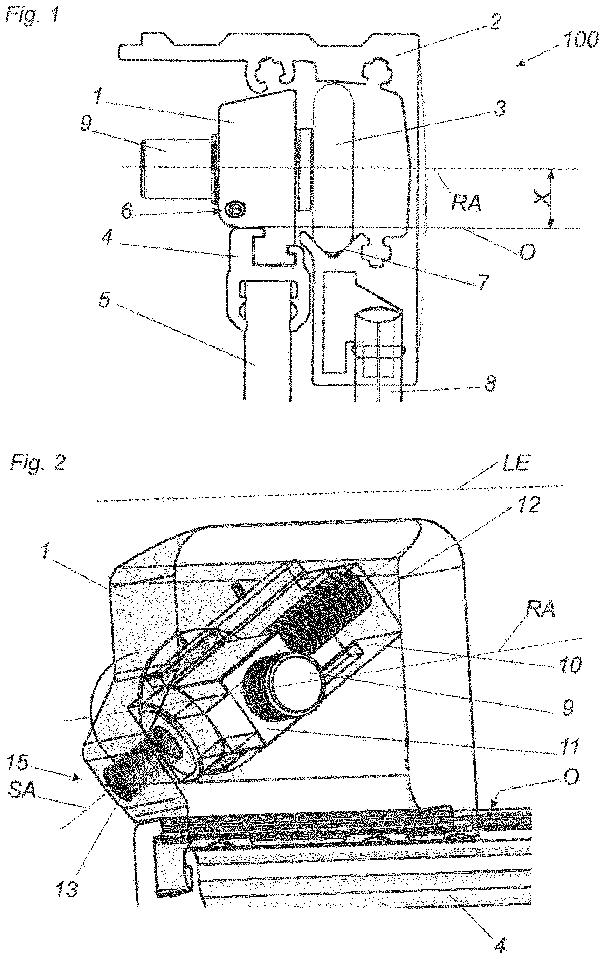

Die Fig. 1 zeigt eine entlang einer Längserstreckung eines Führungsprofiles 2 gelagerte Schiebetüre 5, die an einer Aufhängung 1 angeordnet ist. Die Aufhängung 1 ist über den Laufkörper 3, vorzugsweise als Rolle ausgeführt, mit dem Führungsprofil 2 verbunden. Wird die Schiebetüre 5 entlang der Längserstreckung LA des Führungsprofiles 2 bewegt, so rollt der Laufkörper 3 entlang einer Lauffläche 7 ab. Der Laufkörper 3 kann nicht nur als Rolle ausgebildet sein, sondern auch als Gleitschuh, Nadellager, Kugelführung oder ähnliches. Durch die Verstellvorrichtung 6 wird der Abstand X zwischen der Oberkante O der Schiebetüre 5 oder dem an der Schiebetüre 5 befestigten Türprofil 4 und dem Mittelpunkt des Lagerzapfens 9, an dem der Rollenkörper 3 befestigt ist, eingestellt. Der Mittelpunkt des Lagerzapfens 9 ist in diesem Ausführungsbeispiel gleichzeitig die Rollachse RA des Laufkörpers 3. Eine Einstellung des Abstandes X erfolgt somit in anderen Worten zwischen der Rollachse RA und der Oberkante O. Durch eine Verstellung der Verstellvorrichtung 6 wird somit die Schiebetüre 5 weiter nach oben oder weiter nach unten bewegt. Das Führungsprofil 2 kann dabei direkt an einer Decke eines Raumes angeordnet sein oder auch an einem statischen Teil der Duschtrennwand 101. Zum Beispiel ist es vorgesehen, dass das Führungsprofil 2 direkt an einer feststehenden Trennwand 8 der Duschkabine oder der Duschtrennwand 101 angeordnet ist. Es ist auch denkbar, dass die Aufhängung 1 unter der beweglichen Schiebetüre 5 eingesetzt wird und zusammen mit einem am Boden der Duschtrennwand 101 angeordneten Führungsprofil 2 eine abstützende Funktion übernimmt. Eine Verstellung der Schiebetüre 5 wäre über die Verstellvorrichtung 6 somit ebenfalls möglich. Die Schiebetüre 5 wird dabei über ein weiteres Führungsprofil 2 an der Oberseite der Duschtrennwand 101 mit genügend Höhenspiel zum Kompensieren des Einstellweges gelagert.

Die Fig. 2 zeigt den Beschlag 100, wobei die Aufhängung 1 dabei transparent gezeichnet wurde, um einen Einblick in das Innere der Aufhängung 1 zu schaffen. Zur Vereinfachung wurde in Fig. 2 das Führungsprofil 2 entfernt, die Längserstreckung LE des Führungsprofils 2 wurde jedoch eingezeichnet, um einen Bezug zur Stellachse SA herstellen zu können. Die Stellachse SA ist dabei geneigt zur Längserstreckung LE, was zur Erleichterung der Montage und zur besseren Zugänglichkeit der Verstellvorrichtung 6 führt. In einer Führung 10 befindet sich dabei der Schlitten 11, durch welchen sich die Verstellschraube 12 erstreckt. Wird an der Verstellschraube 12 gedreht, so wird über das Gewinde an der Stellschraube 12 die Bewegung und auch die Kraft auf den Schlitten 11 übertragen. Die Verstellschraube 12 ist dabei drehbar um die Stellachse SA aber unbeweglich in Richtung der Stellachse SA in der Führung 10 gelagert. Sie kann sich also drehen, jedoch nicht entlang der Stellachse SA ausweichen. Somit werden die Bewegungen am Gewinde der Stellschraube 12 direkt auf den Schlitten 11 übertragen, welcher sich in der Führung 10 befindet und in der Führung 10 verdrehstabil gelagert ist. Durch die nicht in Ihrer Lage relativ entlang der Stellachse SA veränderbare Stellschraube 12 und die verdrehstabile Lagerung des Schlittens 11 in der Führung 10 wird eine Zwangsführung entlang der Führung 10 erreicht, sobald die Verstellschraube 12 um die Stellachse SA gedreht wird. Am Schlitten 11 befindet sich der Lagerzapfen 9 für den in der Fig. 2 zur Vereinfachung nicht dargestellten Laufkörper 3. Nach der Verstellung der Stellschraube 12 wird entlang der Stellachse SA die Feststellvorrichtung 13 in das dort befindliche Gewinde eingeschraubt, wobei ein Kraftschluss zwischen der Verstellschraube 12 und der Feststellvorrichtung 13 erreicht wird. Die Feststellvorrichtung 13 befindet sich dabei in einer Öffnung 15 in der Aufhängung 1. Anstelle einer als Feststellschraube ausgeführten Feststellvorrichtung 13 kann zum Beispiel auch ein Stopfen vorgesehen sein, welcher Formschlüssig in den Kopf 14 der Verstellschraube 12 eingreift und durch den Formschluss ein Verdrehen der Verstellschraube 12 verhindert, indem er sich zusätzlich von der Kontur des Beschlages 100 abstützt.

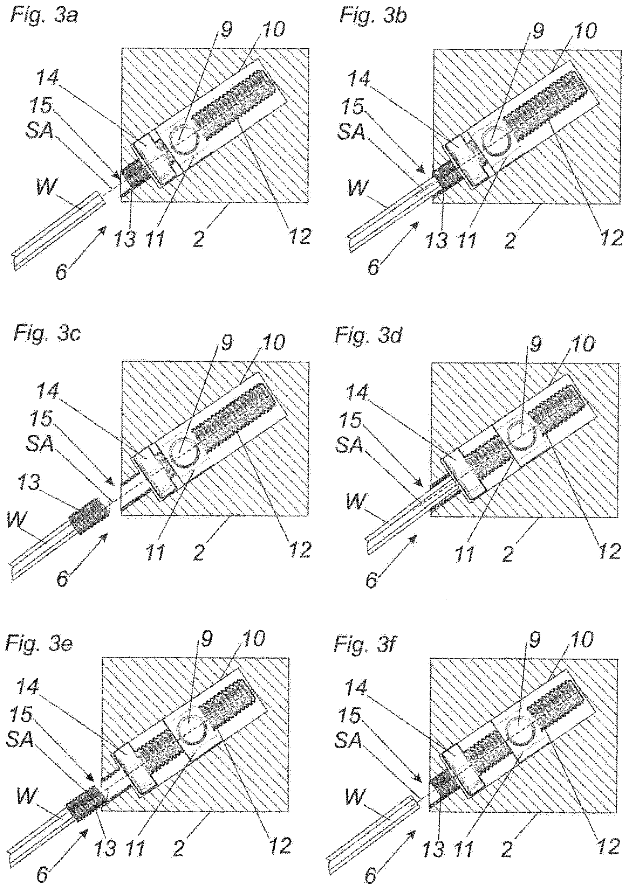

Die Fig. 3a zeigt einen ersten Arbeitsschritt zur Verstellung der Verstellvorrichtung 6, als Stellschraube 12 ausgeführt. Dabei wird die Feststellvorrichtung 13 durch ein Werkzeug W beaufschlagt. Es wird also ein Werkzeug W in eine Öffnung 15 in der Aufhängung 1 eingesetzt. Die Feststellvorrichtung 13 ist dabei vorzugsweise in Form einer Schraube, besonders bevorzugt in Form einer Madenschraube, ausgeführt. Diese Madenschraube weist einen Innensechskant auf, welcher mit einem Inbusschlüssel beaufschlagt werden kann. Eine Schlitzschraube oder auch eine Torx-Schraube wäre hier ebenfalls möglich.

Die Fig. 3b zeigt, wie die Feststellvorrichtung 13 aus der Öffnung 15 herausgedreht wird. Dabei verändert sich die Position der Feststellvorrichtung 13 entlang der Stellachse SA. Die Position der Verstellvorrichtung 6, als Stellschraube 12 ausgebildet, verändert sich dabei nicht. Somit bleibt auch der Schlitten 11 entlang seiner Führung 10 in seiner Position.

Die Fig. 3c zeigt, wie die Feststellvorrichtung 13 durch das Werkzeug W aus der Öffnung 15 entnommen worden ist. Somit wird der Zugang für das Werkzeug W zum Kopf 14 der Verstellschraube 12 hergestellt.

In Fig. 3d wird gezeigt, wie durch das Werkzeug W die Stellschraube 12 verdreht wird. Diese verändert ihre Position entlang der Stellachse SA nicht. Durch das Drehen an der Verstellschraube 12 wird der Schlitten 11 entlang der Führung 10 bewegt. Dabei verändert sich auch die Position des Lagerzapfens 9, der fest mit dem Schlitten 11 verbunden ist.

Die Fig. 3e zeigt, wie nach der Einstellung der gewünschten Position des Schlittens 11 die Feststellvorrichtung 13 wieder in die Öffnung 15 eingeführt wird. Das Einführen der Feststellvorrichtung 13 erfolgt dabei entlang der Stellachse SA.

Fig. 3f zeigt die arretierte Stellschraube 12 mit der festgedrehten oder festsitzenden Feststellvorrichtung 13. Diese kontaktiert dabei den Kopf 14 der Stellschraube 12. Ein ungewolltes Verdrehen der Stellschraube 12 kann nicht mehr erfolgen. Der Schlitten 11 und somit auch der Laufkörper 3 (in Fig. 3f nicht ersichtlich) am Lagerzapfen 9 ist in der Position verriegelt und arretiert. Eine erneute Verstellung kann erfolgen, indem die Arbeitsschritte wie in Fig. 3a bis 3e gezeigt, wiederholt werden.

Somit zeigen die Figuren 3a bis 3f ein Verfahren zum Einstellen eines Beschlages 100, gekennzeichnet durch folgende Arbeitsschritte: Einsetzen eines Werkzeuges W in eine Öffnung 15 in der Aufhängung 1 (Fig. 3a) und Entfernen der Feststellvorrichtung 13 - vorzugsweise in Form einer Schraube, besonders bevorzugt in Form einer Madenschraube - aus der Öffnung 15 (Fig. 3b, Fig 3c). Als nächster Arbeitsschritt ist das Einsetzen des Werkzeuges W in die Öffnung 15 der Aufhängung 1 und Verstellen der Verstellvorrichtung 6 in eine vorgewählte Position durch Verdrehen des Kopfes 14 einer Stellschraube 12 vorgesehen (Fig. 3d). Darauffolgend wird das Werkzeug W aus der Öffnung 15 genommen. Anschließend erfolgt das Einsetzen der Feststellvorrichtung 13 in die Öffnung 15 in Richtung der Stellachse SA (Fig. 3e). Daraufhin wird die Feststellvorrichtung 13 in der Öffnung 15 mittels Werkzeug W in Richtung der Stellachse SA eingedreht. Schließlich erfolgt das Feststellen der Feststellvorrichtung 13 durch Kontaktieren der Feststellvorrichtung 13 mit der Stellschraube 12 Fig. 3f).

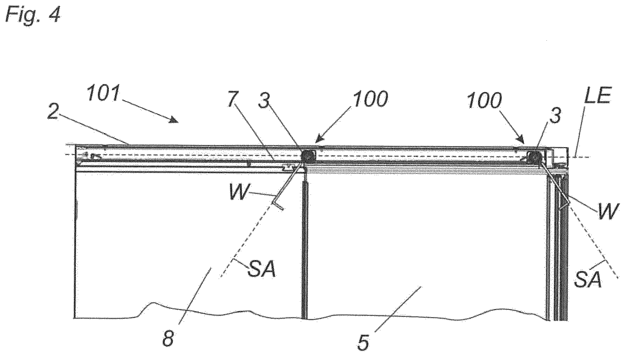

Die Fig. 4 zeigt eine Duschtrennwand 101 mit zumindest einer Schiebetüre 5, an der zumindest ein Beschlag 100 befestigt ist. Das Werkzeug W wird dabei schräg zur Längserstreckung LE des Führungsprofiles 2 eingesetzt. Die Verstellung erfolgt somit entlang der zur Längserstreckung LE geneigten Stellachse SA. Der Neigungswinkel der Stellachse SA befindet sich in einem Bereich zwischen 15 bis 70° relativ zur Längserstreckung LE des Führungsprofiles 2. Das Werkzeug W wird dabei seitlich an den Schiebetüren 5 bewegt, eine Kollision mit der Schiebetüre 5 oder dem Führungsprofil 2 ist somit ausgeschlossen. Durch das Einführen des Werkzeuges W schräg von unten und auch die Verstellarbeiten in diesem Winkel wird die Montage und die Einstellung des Beschlages 100 stark erleichtert.

## Patentansprüche

1. Beschlag (100) für eine entlang einer Längserstreckung (LE) eines Führungsprofiles (2) verfahrbar gelagerte Schiebetüre (5) einer Duschtrennwand (101), mit:
- einer mit der Schiebetüre (5) verbindbaren Aufhängung (1),
- zumindest einem an der Aufhängung (1) gelagerten Laufkörper (3), wobei der Laufkörper (3) entlang der Längserstreckung (LE) des Führungsprofiles (2) verfahrbar gelagert ist,
- einer Verstellvorrichtung (6) zur Verstellung der Position des zumindest einen Laufkörpers (3) relativ zur Aufhängung (1) entlang einer Stellachse (SA), wobei die Verstellvorrichtung (6) sich entlang der Stellachse (SA) erstreckt, wobei die Stellachse (SA) in Einbaulage des Beschlags (100) geneigt zur Längsachse (LE) des Führungsprofils (2) ausgerichtet ist,
**gekennzeichnet durch** eine axial in Richtung der Stellachse (SA) in die Aufhängung (1) einsetzbare Feststellvorrichtung (13) zur Arretierung der Position der Verstellvorrichtung (6), wobei die Feststellvorrichtung (13) durch eine Schraube, vorzugsweise Madenschraube, ausgebildet ist.

2. Beschlag (100) nach Anspruch 1, **dadurch gekennzeichnet, dass** die Verstellvorrichtung (6) eine Stellschraube (12) aufweist, wobei an der Stellschraube (12) ein Schlitten (11) angeordnet ist, wobei bei Verdrehung der Stellschraube (12) die Position des Schlittens (11) entlang der Stellschraube (12) veränderbar ist.

3. Beschlag (100) nach Anspruch 2, **dadurch gekennzeichnet, dass** der Schlitten (11) entlang einer sich in der Aufhängung (1) erstreckenden Führung (10) verfahrbar gelagert ist, wobei die Führung (10) sich entlang der Stellachse (SA) erstreckt, wobei die Stellschraube (12) drehbar in der Führung (10) gelagert ist.

4. Beschlag (100) nach Anspruch 2 oder 3, **dadurch gekennzeichnet, dass** der Schlitten (11) zumindest einen Achszapfen (9) zur Lagerung des zumindest einen Laufkörpers (3) aufweist.

5. Beschlag (100) nach einem der Ansprüche 1 bis 4, **dadurch gekennzeichnet, dass** die Aufhängung eine Öffnung (15) aufweist, durch welche die Verstellvorrichtung (6) mittels geeignetem Werkzeug (W) - vorzugsweise durch einen Inbusschlüssel, Torxschlüssel oder einen Schraubenzieher - kontaktierbar und verstellbar ist, wobei sich die Öffnung (15) entlang der Stellachse (SA) erstreckt.

6. Beschlag (100) nach Anspruch 5, **dadurch gekennzeichnet, dass** die Öffnung (15) ein Gewinde zur Aufnahme der Feststellvorrichtung (13) aufweist.

7. Beschlag (100) nach einem der Ansprüche 1 bis 6, **dadurch gekennzeichnet, dass** die Feststellvorrichtung (13) im arretierten Zustand der Verstellvorrichtung (6) axial in Richtung der Stellachse (SA) gegen die Verstellvorrichtung (6) wirkt, vorzugsweise drückt.

8. Beschlag (100) nach einem der Ansprüche 1 bis 7, **dadurch gekennzeichnet, dass** zwischen Verstellvorrichtung (6) und Feststellvorrichtung (13) eine kraftschlüssige Verbindung herstellbar ist, wobei der Kraftschluss zwischen Verstellvorrichtung (6) und Feststellvorrichtung (13) in Richtung der Stellachse (SA) wirkt.

9. Beschlag (100) nach einem der Ansprüche 2 bis 8, **dadurch gekennzeichnet, dass** die Feststellvorrichtung (13) durch eine Schraube - vorzugsweise Madenschraube - ausgebildet ist, wobei diese in einen Kopf (14) der Stellschraube (12) eingreifbar in einem axial entlang der Stellachse (SA) ausgerichteten Gewinde einer Öffnung (15) verdrehbar gelagert ist.

10. Beschlag (100) nach einem der Ansprüche 1 bis 9, **dadurch gekennzeichnet, dass** die Verstellvorrichtung (6) und die Feststellvorrichtung (13) in Einbaulage im Inneren der Aufhängung (1) angeordnet sind.

11. Beschlag (100) nach einem der Ansprüche 1 bis 9, **dadurch gekennzeichnet, dass** in Einbaulage des Beschlages (100) die Verstellung der Position des zumindest einen Laufkörpers (3) relativ zur Aufhängung (1) ein Anheben oder Absenken der Schiebetüre (5) bewirkt.

12. Schiebetüre (5) mit zumindest einem Beschlag nach einem der Ansprüche 1 bis 11.

13. Duschtrennwand (101) mit zumindest einer Schiebetüre (5) nach Anspruch 12.

14. Verfahren zur Einstellung eines Beschlages (100) nach einem der Ansprüche 1 bis 11, **gekennzeichnet durch** folgende Arbeitsschritte:
- Einsetzen eines Werkzeuges (W) in eine Öffnung (15) in der Aufhängung (1) und Entfernen der Feststellvorrichtung (13) - vorzugsweise in Form einer Schraube, besonders bevorzugt in Form einer Madenschraube - aus der Öffnung (15).
- Einsetzen des Werkzeuges (W) in die Öffnung (15) der Aufhängung (1) und Verstellen der Verstellvorrichtung (6) in eine vorgewählte Position durch Verdrehen des Kopfes (14) einer Stellschraube (12).
- Herausnehmen des Werkzeuges (W) aus der Öffnung (15).
- Einsetzen der Feststellvorrichtung (13) in die Öffnung (15) in Richtung der Stellachse (SA).
- Eindrehen der Feststellvorrichtung (13) in der Öffnung (15) mittels Werkzeug (W) in Richtung der Stellachse (SA).
- Feststellen der Feststellvorrichtung (13) durch Kontaktieren der Feststellvorrichtung (13) mit der Stellschraube (12).

## Claims

1. A fitment (100) for a sliding door (5) of a shower partition (101), the door being mounted displaceably along a longitudinal extent (LE) of a guide profile member (2), comprising
- a suspension (1) which can be connected to the sliding door (5),
- at least one running member (3) mounted to the suspension (1), the running member (3) being mounted displaceably along the longitudinal extent (LE) of the guide profile member (2), and
- an adjusting device (6) for adjusting the position of the at least one running member (3) relative to the suspension (1) along an adjustment axis (SA), wherein the adjusting device (6) extends along the adjusting axis (SA), wherein the adjusting axis (SA) in the position of installation of the fitment (100) is oriented inclinedly relative to the longitudinal axis (LE) of the guide profile member (2),
**characterised by** a locking device (13) which can be inserted into the suspension (1) axially in the direction of the adjusting axis (SA) for arresting the position of the adjusting device (6), the locking device (13) being formed by a screw, preferably a grub screw.

2. A fitment (100) according to claim 1 **characterised in that** the adjusting device (6) has an adjusting screw (12), wherein a slider (11) is arranged on the adjusting screw (12), wherein upon rotation of the adjusting screw (12) the position of the slider (11) is variable along the adjusting screw (12).

3. A fitment (100) according to claim 2 **characterised in that** the slider (11) is mounted displaceably along a guide (10) extending in the suspension (1), wherein the guide (10) extends along the adjusting axis (SA), wherein the adjusting screw (12) is mounted rotatably in the guide (10).

4. A fitment (100) according to claim 2 or claim 3 **characterised in that** the slider (11) has at least one trunnion (9) for mounting the at least one running member (3).

5. A fitment (100) according to one of claims 1 to 4 **characterised in that** the suspension has an opening (15), through which the adjusting device (6) can be contacted and adjusted by means of a suitable tool (W) - preferably by an Allen key, a Torx key or a screwdriver -, wherein the opening (15) extends along the adjusting axis (SA).

6. A fitment (100) according to claim 5 **characterised in that** the opening (15) has a thread for receiving the locking device (13).

7. A fitment (100) according to one of claims 1 to 6 **characterised in that** the locking device (13) in the arrested state of the adjusting device (6) acts axially in the direction of the adjusting axis (SA) against the adjusting device (6), preferably pressing same.

8. A fitment (100) according to one of claims 1 to 7 **characterised in that** a force-locking connection can be made between the adjusting device (6) and the locking device (13), wherein the force-locking connection acts between the adjusting device (6) and the locking device (13) in the direction of the adjusting axis (SA).

9. A fitment (100) according to one of claims 2 to 8 **characterised in that** the locking device (13) is formed by a screw - preferably a grub screw - , wherein same engageably into a head (14) of the adjusting screw (12) is mounted displaceably in a thread of an opening (15), said thread being oriented axially along the adjusting axis (SA).

10. A fitment (100) according to one of claims 1 to 9 **characterised in that** the adjusting device (6) and the locking device (13) in the installation position are arranged in the interior of the suspension (1).

11. A fitment (100) according to one of claims 1 to 9 **characterised in that** in the installation position of the fitment (100) adjustment of the position of the at least one running member (3) relative to the suspension (1) causes raising or lowering of the sliding door (5).

12. A sliding door (5) comprising at least one fitment according to one of claims 1 to 11.

13. A shower partition (101) comprising at least one sliding door (5) according to claim 12.

14. A method of adjusting a fitment (100) according to one of claims 1 to 11 **characterised by** the following working steps:
- inserting a tool (W) into an opening (15) in the suspension (1) and removing the locking device (13) - preferably in the form of a screw, particularly preferably in the form of a grub screw - from the opening (15),
- inserting the tool (W) into the opening (15) of the suspension (1) and adjusting the adjusting device (6) into a preselected position by turning the head (14) of an adjusting screw (12),
- removing the tool (W) from the opening (15),
- inserting the locking device (13) into the opening (15) in the direction of the adjusting axis (SA),
- screwing the locking device (13) in the opening (15) by means of the tool (W) in the direction of the adjusting axis (SA), and
- locking the locking device (13) by contacting the locking device (13) with the adjusting screw (12).

## Revendications

1. Ferrure (100) pour une porte coulissante (5), montée mobile le long d'une étendue longitudinale (LE) d'un profilé de guidage (2), d'une cloison de douche (101), avec:
- une suspension (1) pouvant être reliée à la porte coulissante (5);
- au moins un corps déplaçable (3) monté sur la suspension (1), dans laquelle le corps déplaçable (3) est monté mobile le long de l'étendue longitudinale (LE) du profilé de guidage (2),
- un dispositif de réglage (6) pour le réglage de la position de l'au moins un corps déplaçable (3) par rapport à la suspension (1) le long d'un axe de réglage (SA), dans laquelle le dispositif de réglage (6) s'étend le long de l'axe de réglage (SA), dans laquelle l'axe de réglage (SA), dans la position de montage de la ferrure (100), est orienté de manière inclinée par rapport à l'axe longitudinal (LE) du profilé de guidage (2),
**caractérisée par** un dispositif de blocage (13) pouvant être inséré axialement en direction de l'axe de réglage (SA) dans la suspension (1) pour arrêter la position du dispositif de réglage (6), dans laquelle le dispositif de blocage (13) est formé par une vis, de préférence vis sans tête.

2. Ferrure (100) selon la revendication 1, **caractérisée en ce que** le dispositif de réglage (6) présente une vis de réglage (12), dans laquelle un coulisseau (11) est disposé sur la vis de réglage (12), dans laquelle lors de la rotation de la vis de réglage (12), la position du coulisseau (11) le long de la vis de réglage (12) peut être modifiée.

3. Ferrure (100) selon la revendication 2, **caractérisée en ce que** le coulisseau (11) est monté mobile le long d'un guidage (10) s'étendant dans la suspension (1), dans laquelle le guidage (10) s'étend le long de l'axe de réglage (SA), dans laquelle la vis de réglage (12) est montée en rotation dans le guidage (10).

4. Ferrure (100) selon la revendication 2 ou 3, **caractérisée en ce que** le coulisseau (11) présente au moins un tourillon d'arbre (9) pour le montage de l'au moins un corps déplaçable (3).

5. Ferrure (100) selon l'une quelconque des revendications 1 à 4, **caractérisée en ce que** la suspension présente une ouverture (15), par laquelle le dispositif de réglage (6) peut être mis en contact et réglé au moyen d'un outil (W) adapté de préférence par une clé à six pans creux, clé à empreinte Torx ou un tournevis, dans laquelle l'ouverture (15) s'étend le long de l'axe de réglage (SA).

6. Ferrure (100) selon la revendication 5, **caractérisée en ce que** l'ouverture (15) présente un filet destiné à loger le dispositif de blocage (13).

7. Ferrure (100) selon l'une quelconque des revendications 1 à 6, **caractérisée en ce que** le dispositif de blocage (13), dans l'état arrêté du dispositif de réglage (6), agit axialement en direction de l'axe de réglage (SA) contre le dispositif de réglage (6), de préférence effectue une pression.

8. Ferrure (100) selon l'une quelconque des revendications 1 à 7, **caractérisée en ce qu'**une liaison à force peut être établie entre le dispositif de réglage (6) et le dispositif de blocage (13), dans laquelle la liaison à force entre le dispositif de réglage (6) et le dispositif de blocage (13) agit en direction de l'axe de réglage (SA).

9. Ferrure (100) selon l'une quelconque des revendications 2 à 8, **caractérisée en ce que** le dispositif de blocage (13) est réalisé par une vis (de préférence vis sans tête), dans laquelle celle-ci est montée en rotation dans un filet d'une ouverture (15) orienté axialement le long de l'axe de réglage (SA) avec possibilité d'insertion dans une tête (14) de la vis de réglage (12).

10. Ferrure (100) selon l'une quelconque des revendications 1 à 9, **caractérisée en ce que** le dispositif de réglage (6) et le dispositif de blocage (13), dans la position de montage, sont disposés à l'intérieur de la suspension (1).

11. Ferrure (100) selon l'une quelconque des revendications 1 à 9, **caractérisée en ce que**, dans la position de montage de la ferrure (100), le réglage de la position de l'au moins un corps déplaçable (3) par rapport à la suspension (1) provoque un soulèvement ou abaissement de la porte coulissante (5).

12. Porte coulissante (5) avec au moins une ferrure selon l'une quelconque des revendications 1 à 11.

13. Cloison de douche (101) avec au moins une porte coulissante (5) selon la revendication 12.

14. Procédé de réglage d'une ferrure (100) selon l'une quelconque des revendications 1 à 11, **caractérisé par** les étapes de travail suivantes:
- l'insertion d'un outil (W) dans une ouverture (15) dans la suspension (1) et le retrait du dispositif de blocage (13) (de préférence sous forme d'une vis, de manière particulièrement préférée sous forme d'une vis sans tête) de l'ouverture (15).
- l'insertion de l'outil (W) dans l'ouverture (15) de la suspension (1) et le réglage du dispositif de réglage (6) dans une position présélectionnée par amenée en rotation de la tête (14) d'une vis de réglage (12).
- l'enlèvement de l'outil (W) de l'ouverture (15).
- le vissage du dispositif de blocage (13) dans l'ouverture (15) en direction de l'axe de réglage (SA).
- l'insertion du dispositif de blocage (13) dans l'ouverture (15) au moyen de l'outil (W) en direction de l'axe de réglage (SA).
- le blocage du dispositif de blocage (13) par mise en contact du dispositif de blocage (13) avec la vis de réglage (12).
